Europäisches Patentamt

(19) European Patent Office

Office européen des brevets

(11) Publication number: **0 445 935 A2**

(12) # EUROPEAN PATENT APPLICATION

(21) Application number: **91301374.4**

(22) Date of filing: **21.02.91**

(51) Int. Cl.$^5$: **G05D 13/62**

(30) Priority: **07.03.90 GB 9005081**

(43) Date of publication of application:
**11.09.91 Bulletin 91/37**

(84) Designated Contracting States:
**DE ES FR GB IT SE**

(71) Applicant: **LUCAS INDUSTRIES PUBLIC LIMITED COMPANY**
**Brueton House, New Road**
**Solihull, West Midlands B91 3TX (GB)**

(72) Inventor: **Glover, Douglas William**
**69 Foxcote Close, Winyates East**
**Redditch, Worcs B98 0PS (GB)**

(74) Representative: **Robinson, John Stuart et al**
**Marks & Clerk Alpha Tower Suffolk Street**
**Queensway**
**Birmingham, B1 1TT (GB)**

(54) **Method of and apparatus for controlling wheel spin.**

(57) A vehicle speed and wheel spin calculator (7) supplies signals representing vehicle speed and excessive wheel spin to a target spin value calculator (8). The target spin value calculator (8) determines a target spin value corresponding to maximum friction between a driven wheel (3) and the ground by increasing the target value if the slope of vehicle speed or acceleration with respect to wheel spin is positive and decreasing the target value if the slope is negative. A spin controller (10) reduces engine power demand if wheel spin exceeds the target value.

EP 0 445 935 A2

FIG.I.

## METHOD OF AND APPARATUS FOR CONTROLLING WHEEL SPIN

The present invention relates to a method of and an apparatus for controlling wheel spin.

Wheeled vehicles depend upon the maintenance of an adequate frictional contact between the driven wheels of the vehicle and the ground. When the driving force at the driven wheels exceeds a value which is related to the weight acting on the driven wheels and the coefficient of friction of the ground surface, the driven wheels slip with respect to the ground, thus exhibiting the phenomenon known as wheel spin. During normal operation of a vehicle on surfaces of relatively high coefficient of friction, such as dry tarmac, wheel spin is not a problem. However, on surfaces of relatively poor coefficient of friction, such as waterlogged tarmac, ice, and muddy surfaces, poor driving technique can give rise to wheel spin.

When a wheel spins excessively, the loss of proper frictional contact with the ground allows the wheel to slip sideways and, in extreme cases, can result in spinning or excessive yawing of the vehicle i.e. lateral instability. Small amounts of wheel spin do not result in substantial lateral instability and can be beneficial for maximising acceleration of the vehicle, as will be described hereinafter, or preventing damage to the vehicle transmission caused by careless or over-enthusiastic driving techniques. However, excessive amounts of wheel spin should be avoided and, for this purpose, so-called "traction control" systems have been developed.

Known traction control systems measure the amount of wheel spin and, when this exceeds a fixed threshold, reduce the engine power demand so as to reduce wheel spin below the fixed threshold. In order for such systems to be effective on ground surfaces of very low coefficient of friction, such as ice, the wheel spin threshold has to be set to a relatively low value. However, when wheel spin occurs on surfaces of higher coefficient of friction such as muddy road surfaces, the traction control system reduces wheel spin to below the fixed threshold whereas a higher threshold of wheel spin could be tolerated and would permit higher acceleration. The performance of the vehicle can therefore suffer so as to ensure that lateral stability is maintained for all types of surface.

According to a first aspect of the invention, there is provided a method of controlling wheel spin, comprising detecting the presence and amount of wheel spin, determining vehicle acceleration, determining from the amount of wheel spin and the vehicle acceleration a target spin value corresponding to increased friction between a driven vehicle wheel and ground, and reducing vehicle driving force when the amount of wheel spin exceeds the target spin value.

According to a second aspect of the invention, there is provided an apparatus for controlling wheel spin, comprising means for detecting the presence and amount of wheel spin, means for determining vehicle acceleration, means for determining from the amount of wheel spin and the vehicle acceleration a target spin value corresponding to increased friction between a driven wheel and ground, and means for reducing vehicle driving force when the amount of wheel spin exceeds the target spin value.

Preferably the target spin value corresponds to a maximum value of friction with respect to wheel spin. This may be determined by increasing or decreasing the target spin value until the maximum value of friction is determined from the amount of wheel spin and the vehicle acceleration. For instance, when the amount of wheel spin is increasing and the vehicle speed or acceleration is decreasing or the amount of wheel spin is decreasing and the vehicle speed or acceleration is increasing, the target spin value is decreased, for instance by successively decrementing the target spin value until the maximum value of friction is found or passed. Conversely, when the amount of wheel spin is increasing and the vehicle speed or acceleration is increasing or the amount of wheel spin is decreasing and the vehicle speed or acceleration is decreasing, the target spin value is increased, for instance by successively incrementing the target spin value until the maximum value of friction is found or passed.

A possible problem with this technique can occur when the ground changes from one having a surface of relatively low co-efficient of friction, such as ice, to a surface of relatively high co-efficient of friction, such as tarmac. Such a change in surface friction generally results in a sudden increase in the vehicle acceleration together with a decrease in the amount of wheel spin. In such circumstances, the above-described technique would tend to decrease transitorily the target spin value whereas, in fact, the target spin value should be increased in order to optimise friction. Although such conditions are transitory, in that correct operation is soon restored once the transition from low friction to high friction surface has been passed, and could therefore be tolerated, this possible problem can easily be overcome, for instance by detecting when a change in speed or acceleration occurs which exceeds a limit value or falls outside a predetermined range and, in response to such detection, increasing the target spin value.

In the case where the target spin value is incremented or decremented so as to tend to approach the optimum value corresponding to the maximum value of friction, the size of the increments or decrements is preferably dependent on the change in vehicle speed or acceleration, and preferably proportional to the changes in the vehicle speed or acceleration. The target spin value thus converges towards the optimum value relatively quickly and with little or no instability, such as over-shoot or ringing.

The vehicle engine power demand may be used as the vehicle driving force, for instance derived from an engine management system. Detection of the presence and amount of wheel spin may be provided in an anti-lock braking system of the vehicle.

It is thus possible to adapt the control of wheel spin to the existing ground conditions by varying the target spin value against which wheel spin is compared so as to maximise surface friction. Such an arrangement permits maximum vehicle acceleration to be available under all driving conditions for surfaces of widely differing coefficients of friction while ensuring that lateral instability of the vehicle is avoided. In the case of vehicles equipped with engine management systems and anti-lock brake systems, little or no additional hardware is required. In particular, anti-lock brake systems receive suitable signals from wheel speed sensors and obtain from these signals an indication of the amount of the vehicle speed and wheel spin, and engine management systems are generally based on data processing systems including micro-computers controlled by software, so that wheel spin control can be implemented merely by suitably augmenting the software of the engine management system.

In such vehicles, wheel spin control can be provided at minimal extra cost.

The invention will be further described, by way of example, with reference to the accompanying drawings, in which:

Figure 1 is a block schematic diagram of a wheel spin controller constituting a preferred embodiment of the invention;

Figures 2 to 4 are graphs illustrating typical curves of the co-efficient of friction $\mu$ between a driven wheel and the ground against wheel spin or slip; and

Figure 5 is a flow diagram illustrating part of the operation of the controller of Figure 1.

A vehicle is driven by an internal combustion engine 1 whose operation is controlled by an engine management system 2. The vehicle has a pair of driven wheels 3 connected by a transmission (not shown) to the engine 1. The vehicle also has a pair of undriven wheels 4.

The wheels 3 and 4 are provided with respective sensors 5, such as variable reluctance transducers cooperating with toothed wheels, which provide signals representing the speeds of the wheels. The wheel speed signals are supplied to an anti-lock brake system (ABS) 6 which includes a vehicle speed and spin calculator 7 for providing output signals representing vehicle speed and the amount of wheel spin detected. For instance, the spin calculator 7 compares the speeds of the driven wheels 3 with the speeds of the undriven wheels 4 in order to detect excessive driven wheel speed and supplies a spin signal corresponding to the difference between driven wheel speed and undriven wheel speed as a proportion of undriven wheel speed.

In the case of a vehicle which does not have an anti-lock brake system, the calculator 7 and the sensors 5 may be provided in order to permit traction or wheel spin control. Also, vehicle speed and wheel spin may be determined in other ways, for instance, by comparing the speed of each driven wheel with an average speed of all wheels representing the vehicle speed, or by comparing wheel speed with vehicle speed determined by a speed over ground sensor or the like. Wheel spin control may also be provided for all-wheel drive vehicles, for instance using one of the above mentioned alternative wheel spin detection techniques in place of the comparison with undriven wheel speed illustrated in the drawings.

The engine management system 2 includes a target spin calculator 8 which receives the vehicle speed and wheel spin signals from the calculator 7. The target spin calculator 8 calculates a target spin value in accordance with a function which will be described hereinafter. The target spin value and the spin signal are supplied to a spin controller 10, which provides a signal to an engine power demand controller 9 for reducing the power demand when the wheel spin exceeds the target spin value. The controller 10 comprises a subtracter 11 whose adding input receives the spin signal from the spin calculator 7 and whose subtracting input receives the target spin value from the calculator 8. The subtracter 11 is of the type which produces no output signal when the spin signal is less than the target spin value and produces an output signal corresponding to the difference between the spin signal and the target spin value when the target spin value is exceeded by the spin signal. This difference signal is supplied to a proportional integral , differential (PID) controller 12 whose output forms the output of the spin controller 10.

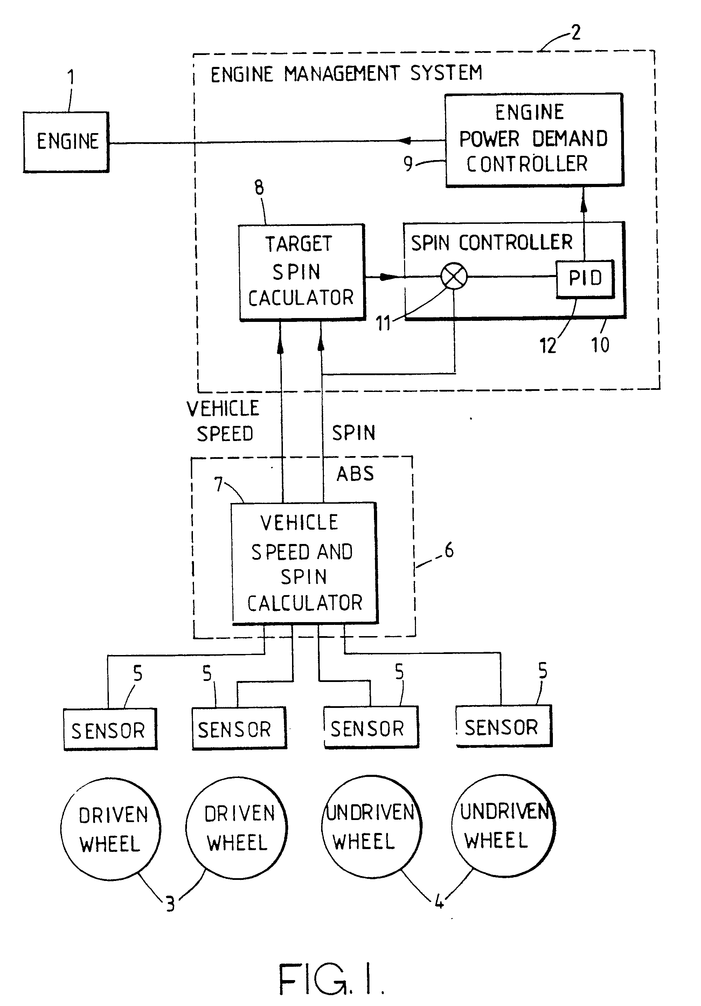

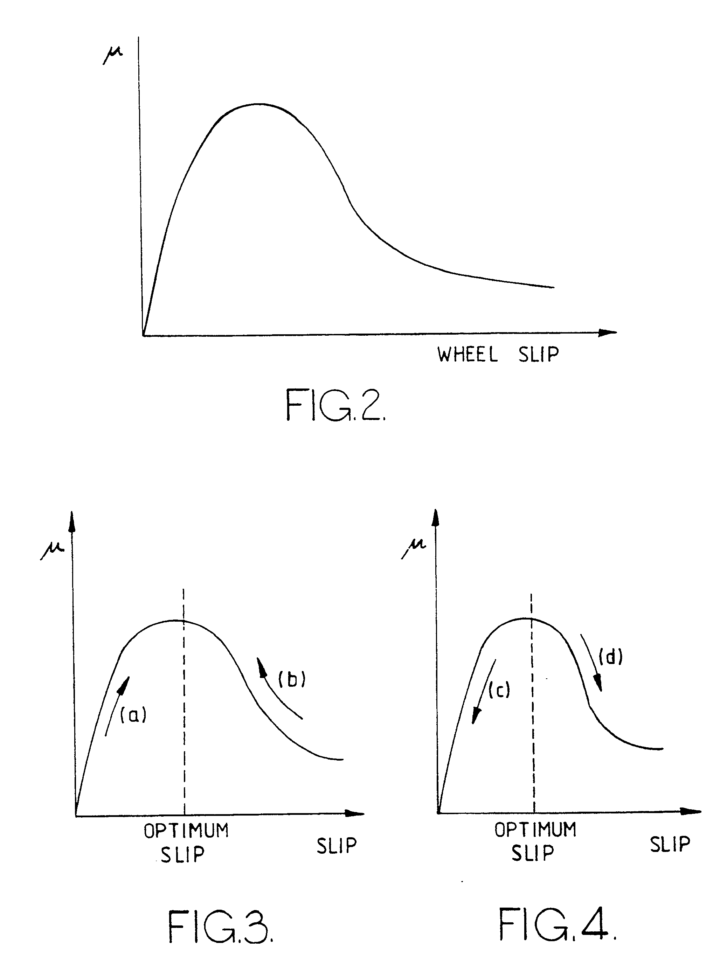

As shown in Figures 2 to 4, the co-efficient of surface friction $\mu$ varies with the amount of wheel spin or slip and reaches a maximum value for a relatively low level of slip, which maximum value is greater than the coefficient of friction for zero slip. Thus, when wheel spin occurs, advantage can be taken of the increased coefficient of friction by controlling the engine power demand so as to maintain wheel slip at or around the optimum slip value corresponding to the maximum in the co-efficient of friction. In order to adapt the target spin value to the optimum slip value, the system shown in Figure 1 compares the changes in wheel spin and changes in vehicle speed or acceleration so as to determine whether the target spin value is greater than or less than the optimum slip value, and causes the target spin value to be incremented or decremented by an amount proportional to the change in vehicle speed or acceleration. This process occurs periodically during each wheel spin cycle of vehicle operation so that the target spin value is held at or adjacent the optimum slip value for the prevailing surface conditions. The system thus adapts the target spin value continuously to the prevailing conditions and, in particular, can even adapt to changes in surface co-efficient of friction during a single wheel spin cycle.

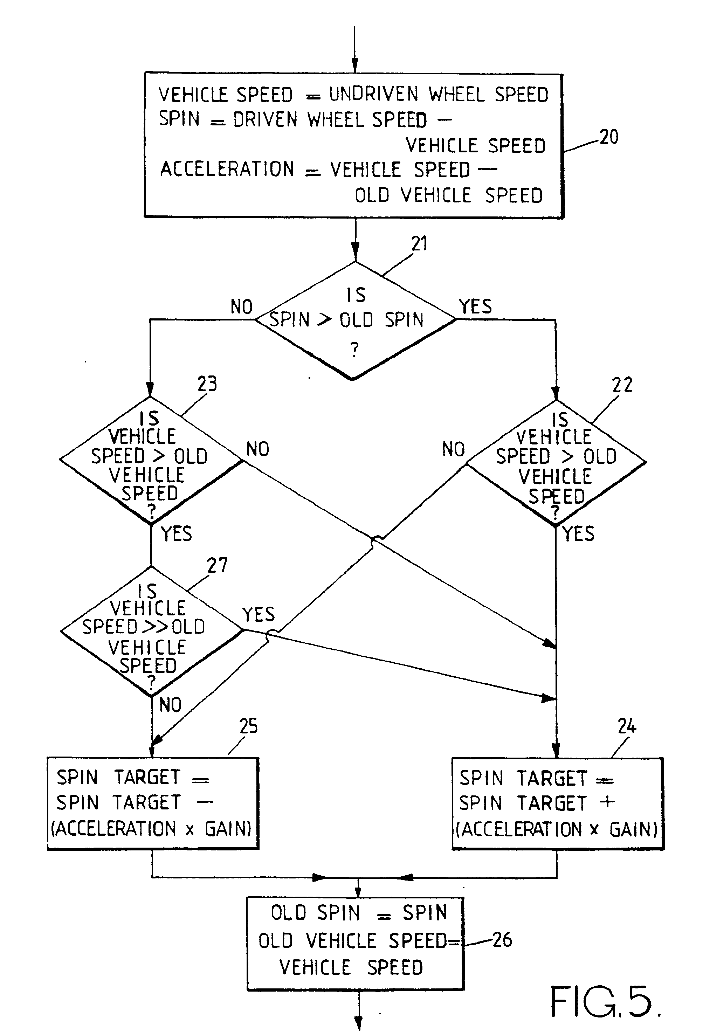

In order to optimise the target spin value, the system decreases the target spin value by an amount proportional to the change in speed or acceleration whenever the wheel slip is increasing and the vehicle speed or acceleration is decreasing (as indicated by the arrow (d) in Figure 4) or when the amount of wheel slip is decreasing and the vehicle speed or acceleration is increasing (as shown by the arrow (b) in Figure 3). Conversely, the target spin value is increased by an amount proportional to the change in vehicle speed or acceleration whenever the wheel slip is increasing and the vehicle speed or acceleration is increasing (arrow (a) in Figure 3) or whenever the wheel slip is decreasing and the vehicle speed or acceleration is decreasing (arrow (c) in Figure 4).

This strategy for optimising the target spin value works satisfactorily on surfaces of constant or slowly changing co-efficient of friction, but sudden changes in the surface from low co-efficient to high co-efficient of friction can be misinterpreted leading to a brief change in the target spin value away from the optimum slip value. When the surface changes from a high co-efficient of friction to a low co-efficient of friction, there is a sudden increase in slip and a sudden decrease in speed or acceleration, and this is correctly interpreted by the above-described strategy such that the target spin value is decreased. However, when the surface changes from low to high co-efficient of friction, for instance when the vehicle moves from ice to clear dry tarmac, there is a sudden increase in speed or acceleration accompanied by a sudden decrease in slip, which is misinterpreted by the above-described strategy and results in the target spin value being decreased whereas it should be increased.

Although this is a transient phenomenon of very short duration, and is therefore unlikely to upset greatly the correct operation of wheel spin control, it can be avoided by detecting when the surface co-efficient of friction changes suddenly. This can be detected by monitoring the change in vehicle speed or acceleration. If the change falls outside a set limit, then this is taken as an indication of a change of surface coefficient of friction and the target spin value is changed appropriately. In particular, if the vehicle speed or acceleration changes by more than a predetermined limit value, this is taken to indicate a change in surface co-efficient of friction from a low value to a high value, and the target spin value is increased.

The flow diagram of Figure 5 illustrates the operation of the target spin calculator 8 of Figure 1, which operates according to the above described strategy in order to optimise the target spin value. The routine illustrated in Figure 5 is performed periodically, for instance every x cycles of operation of the engine management system. The value of x can be selected or varied in order to control the speed of response of the wheel spin controller.

A step 20 is performed in either the vehicle speed and spin calculator 7 or in the target spin calculator 8 or by the combination. This step determines the vehicle speed from the undriven wheel speed, for instance the , average of the speeds of the undriven wheels 4 as sensed by the respective sensors 5. The amount of spin is determined from the difference between the driven wheel speed and the vehicle speed. In a step 21, the spin is compared with the previous spin in the preceding cycle. If the spin exceeds the old spin, a step 22 is performed. If the spin does not exceed the old spin, a step 23 is performed.

In the step 22, the vehicle speed is compared with the old vehicle speed from the preceding cycle. If the vehicle speed exceeds the old vehicle speed, the target spin value is incremented by an increment equal to the product of vehicle acceleration (as determined in the step 20) and a constant representing system gain in step 24. If the vehicle speed is less than or equal to the old vehicle speed, a step 25 is performed in which the target spin value is decremented by the product of the acceleration and the gain. Finally, the values of old spin and old vehicle speed are updated in a step 26 before control is passed to another part of the engine management system.

The step 23 corresponds to the step 22 but for the case where the wheel spin is less than or equal to the old wheel spin. If the vehicle speed is less than or equal to the old vehicle speed, the step 24 described above is performed. If the vehicle speed is less than or equal to the old vehicle speed, a step 27 is performed. The step 27 determines whether the surface co-efficient of friction has changed from a low value to a high value by determining whether the vehicle speed is much greater than the old vehicle speed. If it is, the target spin value is incremented in the step 24. Otherwise, the target spin value is decremented in the step 25.

The spin controller 10 causes the engine power demand produced by the controller 9 to be reduced whenever wheel spin exceeds the prevailing target spin value. For instance the engine power demand controller 9 reduces the engine power demand to a percentage of the normal figure in the presence of a signal from the spin controller 10. Suitable delays may be introduced into the system as necessary in order to compensate for the naturally occurring delays between cause and effect during wheel spin control.

Although it is preferred that the wheel spin controller be implemented as software-controlled data processing hardware, it is possible for the controller to be implemented in other ways. For instance the controller could be implemented as an analog circuit, as a discrete digital circuit, or as a combination. Also, the controller may be implemented as an independent unit for addition to an engine management system and/or an anti-lock brake system, or for use in vehicles which do not have such systems on board.

By adapting the target spin value to the prevailing surface conditions, the controller ensures that maximum performance is available at all times while substantially preventing or greatly reducing the chances of lateral instability of a vehicle. In the case of a vehicle equipped with an anti-lock brake system and a microcomputer-based engine management system, the controller may be implemented merely by augmenting the software of the engine management system and without requiring any additional hardware. Thus, existing engine management systems can easily be modified to implement the wheel spin control function and merely require a signal from the anti-lock brake system indicating detection and amount of wheel spin.

## Claims

1. An apparatus for controlling wheel spin, comprising means for detecting the amount of wheel spin and means for reducing vehicle driving force when the amount of wheel spin exceeds a target spin value, characterised by first determining means (7/8, 20) for determining vehicle acceleration and second determining means (8, 21-25) for determining from the amount of wheel spin and the vehicle acceleration a target spin value corresponding to increased friction between a driven wheel and ground.

2. An apparatus as claimed in Claim 1, characterised in that the second determining means (8, 21-25) is arranged to determine the target spin value corresponding to the maximum value of friction between the driven wheel and the ground.

3. An apparatus as claimed in Claim 1 or 2, characterised in that the second determining means (8, 21-25) is arranged to increment (24) or decrement (25) the target spin value by an amount dependent on the vehicle acceleration.

4. An apparatus as claimed in Claim 3, characterised in that the amount is equal to the product of the vehicle acceleration and a constant.

5. An apparatus as claimed in any one of the preceding claims characterised in that the second determining means (8, 21-25) is arranged to decrease (25) the target spin value when the amount of wheel spin is increasing and the vehicle speed or acceleration is decreasing (22) or when the amount of wheel spin is decreasing and the vehicle speed or acceleration is increasing (23).

6. An apparatus as claimed in any one of the preceding claims, characterised in that the second determining means (8, 21-25) is arranged to increase (24) the target spin value when the amount of wheel spin is increasing and the vehicle speed or acceleration is increasing (22) or when the amount of wheel spin is decreasing and the vehicle speed or acceleration is decreasing (23).

7. An apparatus as claimed in any one of the preceding claims, characterised in that the second determining means (8, 21-25) is arranged to increase (24) the target spin value when a change in vehicle speed or acceleration exceeds a limit value (27).

8. A method of controlling wheel spin, comprising detecting the amount of wheel spin, determining vehicle acceleration, determining from the amount of wheel spin and the vehicle acceleration a target spin value corresponding to increased friction between a driven wheel and ground, and reducing vehicle driving force when the amount of wheel spin exceeds the target spin value.

9. A method as claimed in Claim 8, characterised in that the target spin value determining step determines the target spin value corresponding to the maximum value of friction between the driven wheel and the ground.

10. A method as claimed in Claim 8 or 9, characterised in that the target spin value determining step increments or decrements the target spin value by an amount dependent on the vehicle acceleration.

11. A method as claimed in Claim 10, characterised in that the amount is equal to the product of the vehicle acceleration and a constant.

12. A method as claimed in any one of Claims 8 to 11, characterised in that the target spin value determining step decreases the target spin value when the amount of wheel spin is increasing and the vehicle speed or acceleration is decreasing or when the amount of wheel spin is decreasing and the vehicle speed or acceleration is increasing.

13. An apparatus as claimed in any one of Claims 8 to 12, characterised in that the target spin value determining step increases the target spin value when the amount of wheel spin is increasing and the vehicle speed or acceleration is increasing or when the amount of wheel spin is decreasing and the vehicle speed or acceleration is decreasing.

14. A method as claimed in any one of Claims 8 to 13, characterised in that the target spin value determining step increases the target spin value when a change in vehicle speed or acceleration exceeds a limit value.

FIG. 1.

FIG.2.

FIG.3.

FIG.4.

FIG.5.